# EUROPEAN PATENT SPECIFICATION

(11) **EP 2 301 777 B1**
(45) Date of publication and mention of the grant of the patent: **22.04.2015**
(21) Application number: 10178188.8
(22) Date of filing: 22.09.2010
(51) Int. Cl.: H01M 10/613, H01M 10/615, H01M 10/625, H01M 10/663, B60H 1/00

(54) **Method for controlling the passenger compartment temperature of an electrically operated vehicle and air-conditioning system**
Verfahren zur Steuerung der Innenraumtemperatur eines elektrisch betriebenen Fahrzeugs und Klimaanlagensystem
Procédé de contrôle de la température de compartiment de passager d'un véhicule électrique et système de climatisation

(30) Priority: 28.09.2009 DE 102009043316
(43) Date of publication of application: 30.03.2011
(73) Proprietor: Valeo Klimasysteme GmbH, 96476 Rodach (DE)
(72) Inventor: Haussmann, Roland, 69168 Wiesloch (DE)
(74) Representative: Vieillevigne, Sébastien Nicolas Bernard

(56) References cited:
- EP-A1- 2 072 296
- DE-T2- 60 319 291
- US-A- 4 007 315
- US-A1- 2009 020 620

## Description

The invention relates to a method for controlling the passenger compartment temperature of an electrically operated vehicle which has a battery, and to an air-conditioning system for an electrically operated vehicle.

Air-conditioning systems (referred to as HVAC systems) for vehicles are known which heat or cool the air in a vehicle passenger compartment. In vehicles with an internal combustion engine, the air-conditioning system can heat the air by means of the waste heat of the internal combustion engine. The energy demand for the cooling of the vehicle passenger compartment is comparatively low compared to the quantity of energy carried along in a tank full of fuel. In contrast, in electrically operated vehicles with a battery, the quantity of energy carried along in a battery charge is significantly smaller. When an air-conditioning system with a conventional energy demand operates it therefore significantly reduces the range of the vehicle with just one battery charge in particular as a result of the fact that the electric motor essentially outputs no waste heat or only a small amount of waste heat, which can correspondingly not be used to heat the vehicle passenger compartment. In addition, the cooling of the passenger compartment in summer is extremely energy-intensive.

US 4 007 315 shows, as closest prior art document, a method and system according to the preamble of claims 1 and 15.

The object of the invention is to provide a method for controlling the passenger compartment temperature of an electrically operated vehicle which has a battery and an air-conditioning system for an electrically operated vehicle which permits the passenger compartment temperature to be controlled by means of the air-conditioning system with low additional energy demand during operation of the vehicle. The range of the electrically operated vehicle is therefore to be reduced as little as possible by the activation of the air-conditioning system.

The object of the invention is achieved by means of a method for controlling the passenger compartment temperature of an electrically operated vehicle which has a battery, according to claim 1. In this way, the battery performs its functions both as an accumulator for electrical energy and as an accumulator for thermal energy which can be used to operate the air-conditioning system. Neither additional installation space nor additional weight are required for the heat accumulator.

The cooling or heating takes place during the charging of the battery at the fixed power system.

The heat accumulator can, for example, be coupled to the coolant circuit and decoupled thermally therefrom. After the heating or cooling it is therefore possible to decouple the heat accumulator from the coolant circuit in order, as it were, to isolate said heat accumulator and connect it into the circuit only when required.

According to the invention the temperature of the battery during charging is either lowered to a predefined minimum value in a cooling mode or heated to a predefined maximum value in a battery heating mode.

The predefined maximum value preferably corresponds to the maximum operating temperature of the battery, and/or the minimum value corresponds to the predefined minimum operating temperature of the battery. In this way, the capacitance of the heat accumulator is maximized, while the function of the battery as an electrical accumulator and its service life are not adversely affected.

According to one preferred method variant, thermal energy stored in the battery is fed to the coolant circuit during the heating of the passenger compartment. This reduces the electrical energy required to heat the passenger compartment.

The thermal energy in the discharge air of a vehicle passenger compartment and/or the energy of an electrical vehicle component which is to be cooled, in particular of an inverter, and/or of the electric drive of the vehicle, is preferably fed to the coolant circuit. The coolant circuit functions in this way as a heat pump, wherein, in particular, electrical vehicle components which are to be cooled are cooled and at the same time the vehicle passenger compartment is heated, as a result of which the required electrical energy can be used in an optimum way.

According to the invention the battery is heated or cooled directly by means of the coolant circuit and a heat exchanger which is connected into the coolant circuit.

A radiator, in particular a vaporizer, by means of which the battery is cooled, may be present in the coolant circuit, in the region of the battery. The radiator can optionally be coupled to the heat exchanger or integrated therein.

During the cooling of the battery during the charging process, the coolant is expanded by means of, for example, an expansion valve which can be connected into the circuit in the region of the battery so that said coolant can take up heat from the battery afterwards. This permits good cooling of the battery directly via the coolant circuit.

A heating device, in particular a condenser, by means of which the battery is heated, can be present in the coolant circuit, in the region of the battery.

During the coupling to the charge station, the coolant circuit is used as a hot gas circuit in order to heat the battery by means of the hot gas circuit.

It is possible that the selection of cooling or heating of the battery during the coupling to the charge station is made manually, in particular at the start of the electrical charging process. The driver of the vehicle can in this way select, for example as a function of the next planned use of the vehicle, the operating mode of the air-conditioning system (heating/cooling) which is supported by the battery.

According to the invention, the selection of the cooling mode or heating mode is made automatically on the basis of the external temperature or the time of year.

According to a further preferred method variant, a fluid circuit which is coupled to the coolant circuit is provided, in which fluid circuit the battery and at least one heat source, in particular a discharge air heat exchanger or a vehicle component heat exchanger of a vehicle component which is to be cooled are arranged, wherein during the heating of the battery heat is fed to the fluid circuit from the coolant circuit, and during the operation of the vehicle thermal energy is output to the coolant circuit and/or during cooling of the battery thermal energy is extracted and during operation of the vehicle thermal energy of the heat source is taken up by the battery. This permits, for example, a combination of the air-conditioning system with various devices which can be arranged in the separate fluid circuit and which have to be cooled. The cooling is performed here by the cold battery.

The coolant circuit is preferably operated in such a way that no temperatures of the coolant below 0°C occur. This prevents the formation of frozen water on the various components of the air-conditioning system.

Furthermore, the object of the invention is achieved by an air-conditioning system for an electrically operated vehicle, according to claim 15. Such an air-conditioning system easily permits the application of a method as described above for controlling the passenger compartment temperature of an electrically operated vehicle. The battery performs both its function as an electrical accumulator and the function of a heat accumulator. Depending on requirements, it is possible in this context to store heat or "cold" which permits later heating or cooling of the vehicle passenger compartment or of electrical components during operation of the vehicle, which prevents the range of the electrically operated vehicle from being significantly shortened during operation of the air-conditioning system.

A switchable heat exchanger is preferably provided in the coolant circuit, which heat exchanger can be operated as a vaporizer by an expansion valve or as a condenser via a bypass line, in order to cool or heat the directly or indirectly coupled battery. In this way, the components for heating and cooling the battery require only a small installation space and weight.

It is possible that a discharge air heat exchanger is provided which is connected to a discharge air line of a vehicle passenger compartment in order to take up thermal energy from the discharge air. The thermal energy of the discharge air can therefore be taken up in a way which is analogous with a heat pump and used to heat the vehicle passenger compartment.

It is also possible that a vehicle component heat exchanger is provided which is connected to an electrical vehicle component, in particular an inverter or an electric drive of the vehicle, in order to take up thermal energy from the vehicle component. This also permits operation of the coolant circuit as a heat pump, wherein the heat of the vehicle components which are to be cooled is fed to the vehicle passenger compartment.

The battery can generally also buffer the heat of components and output it to the passenger compartment at a later point in time.

At least two heat exchangers, in particular all the heat exchangers, can be connected in parallel in order to take up thermal energy and to output the energy to the coolant circuit. This permits individual actuation of the various heat exchangers for taking up thermal energy.

It is also conceivable that at least two heat exchangers for taking up thermal energy and for outputting the energy to the coolant circuit are connected in series, wherein the heat exchangers of the components which are to be cooled to the greatest extent, i.e. components with the lowest operating temperature, are arranged at the front of the series circuit. Such an air-conditioning system has a lower degree of complexity, as a result of which the control of the air-conditioning system is simplified and the air-conditioning system becomes more cost-effective.

According to one embodiment of the invention, a fluid circuit which is coupled to the coolant circuit is provided, which fluid circuit has a fluid pump, the battery heat exchanger and at least one further heat exchanger, in particular a discharge air heat exchanger or a vehicle component heat exchanger of a vehicle component which is to be cooled. This optionally also permits independent functioning of the two circuits, as a result of which the thermal energy of the battery can be conserved for a very long time. In addition, the pre-cooled battery can cool electric vehicle components which are to be cooled independently of the coolant circuit.

The fluid circuit is preferably coupled to the coolant circuit via a switchable heat exchanger. In this way, the coolant circuit can be both heated and cooled via the switchable heat exchanger.

It is possible that various coolants are provided in the circuits, wherein preferably a coolant which changes its phase states in the circuit, in particular R134a, HF01234yf or R744, is used in the coolant circuit, and preferably a fluid, in particular water or glycol or a water/glycol mixture, is used in the fluid circuit. This permits the use of various heat exchangers in the respective circuits.

A cooling device which can be optionally connected into the coolant circuit may optionally be provided. The cooling device can, for example, condense the coolant in the coolant circuit.

According to one preferred embodiment, an air-conditioning unit which is connected into the coolant circuit and in which the condenser and a separate vaporizer are seated, is provided. Such an air-conditioning unit is a customary HVAC box which is connected into the coolant circuit and has a condenser and a vaporizer which can be connected into the circuit, via which condenser and vaporizer the air flows to the passenger compartment in a heated or cooled state.

The condenser is preferably fixedly arranged in the coolant circuit, and the air-conditioning unit can optionally form or disconnect a thermal connection of the condenser to the vehicle passenger compartment. Such an air-conditioning system can be manufactured more simply and cost-effectively than an air-conditioning system with complex switching of the coolant circuit for the optional connection of the condenser into the circuit.

It is possible to provide an internal heat exchanger in the coolant circuit. Such an internal heat exchanger permits the compressed coolant with the back-flowing expanded coolant to be cooled.

Further features and advantages of the invention can be found in the following description and the following drawings, to which reference is made. In the drawings, which relate to the method according to the invention:
- figure 1 shows an air-conditioning system according to the invention during the charging and heating of the battery;
- figure 2 shows the air-conditioning system according to Figure 1 during the heating of the vehicle passenger compartment during operation of the vehicle;
- figure 3 shows the air-conditioning system according to Figure 1 during the cooling of the vehicle passenger compartment and/or of the battery;
- figures 4a to c show various configurations of the heat exchangers in parallel and series circuits;
- figure 5 shows a second embodiment of an air-conditioning system according to the invention during the charging and heating of the battery;
- figure 6 shows the air-conditioning system according to figure 5 during the heating of the vehicle passenger compartment during operation of the vehicle;
- figure 7 shows the air-conditioning system according to figure 5 during the charging and cooling of the battery; and
- figure 8 shows the air-conditioning system according to figure 5 during the cooling of the vehicle passenger compartment during operation of the vehicle.

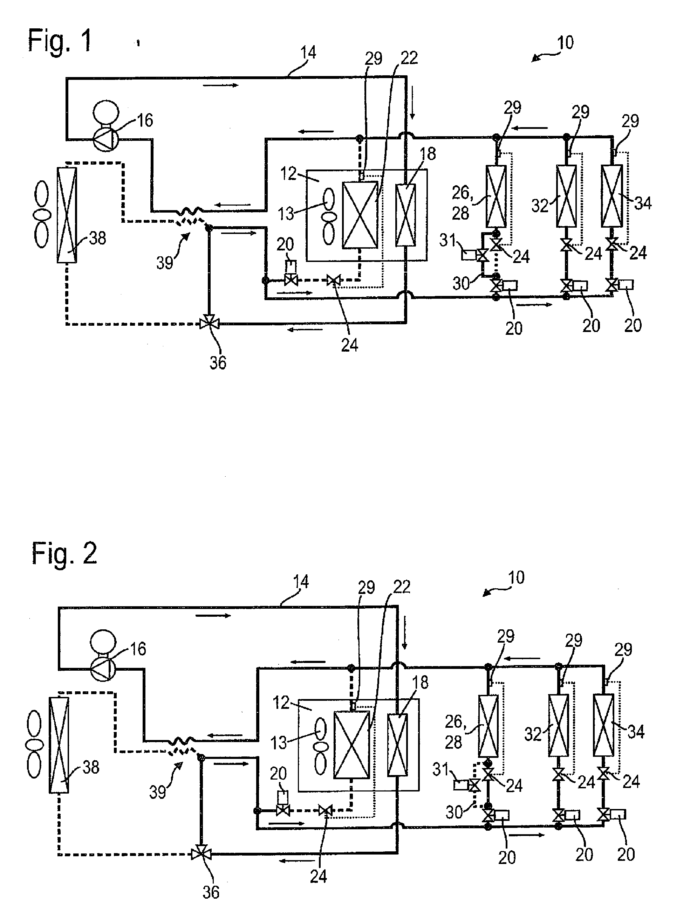

Figures 1 to 3 show a first embodiment of an air-conditioning system 10 for a battery-operated vehicle, specifically for a purely battery-operated vehicle. In this context, various switching states will be explained in the text which follows. A central air-conditioning unit (HVAC unit) 12 forms the core of the air-conditioning system. Such an HVAC unit is already installed now in the vehicle and serves to heat and cool the vehicle passenger compartment. This unit 12 is integrated into a coolant circuit 14.

The unit 12 comprises, in addition to a fan 13, air ducts and air flaps (not shown) for optionally directing airstreams through the unit to the vehicle passenger compartment and as a result controlling the air temperature and quantity of air.

The throughflow direction of the coolant in the coolant circuit is marked by arrows.

The coolant circuit 14 is operated with a coolant, for example R134a, R744(CO₂) or HF0123yf, which changes its phase states in the circuit and in the process can transport, take up and output a large amount of thermal energy.

The coolant flows from a compressor 16 for compressing said coolant through a condenser 18 in the air-conditioning unit 12. The condenser 18 is connected into the coolant circuit 14 and the air-conditioning unit 12 in such a way that air can be carried along the condenser 18, heated there and conveyed into the vehicle passenger compartment, if this is desired by the vehicle occupant.

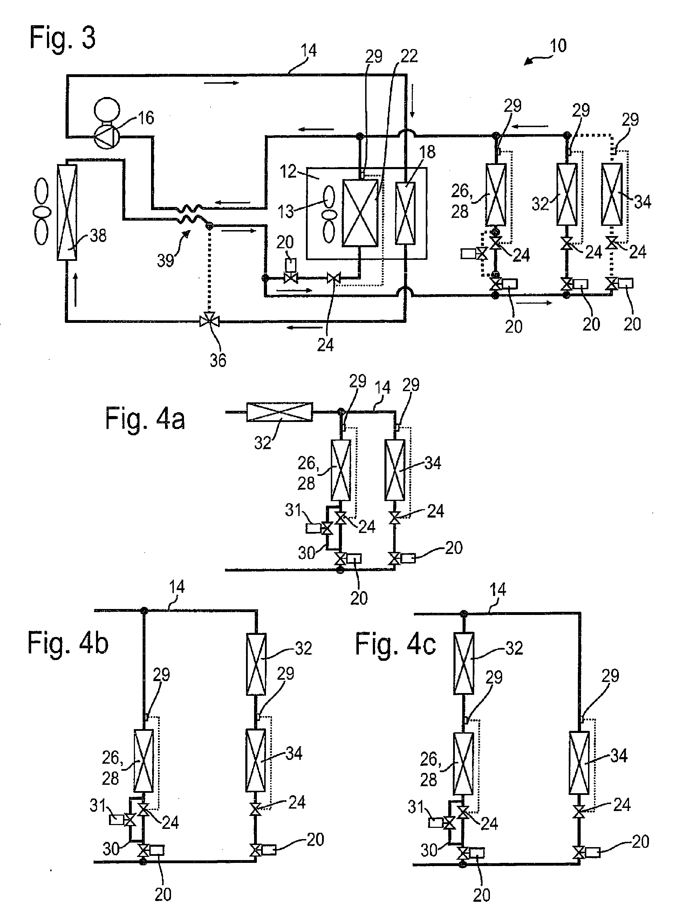

Alternatively, it is, however, possible for a bypass line for bypassing the condenser 18 to be provided in the coolant circuit 14, said bypass line being, however, not illustrated. However, the condenser 18 in the air-conditioning unit 12 can also be thermally decoupled from the vehicle passenger compartment, that is to say the passenger compartment is not heated. This is the case in figures 3, 7 and 8. The unit 12 is switched here in such a way that no heated air is blown into the vehicle passenger compartment.

Downstream of the condenser 18 (following the unbroken line), the coolant circuit 14 branches into a plurality of parallel individual branches which can each be optionally connected into the circuit via a solenoid valve 20 which is connected upstream. The first of these branches which are connected in parallel comprises a vaporizer 22, which is also located in the air-conditioning unit 12. Connected upstream of this vaporizer 22 is an expansion valve 24 in which coolant is expanded, with the result that the coolant cools in the vaporizer 22, and air which has been conveyed through the air-conditioning unit 12 is also cooled. This switched state is illustrated in figure 3.

Three further branches are connected in parallel with the first branch, the first thereof in turn comprises a battery 26 with integrated heat exchanger 28. The battery serves as a power source for the electric vehicle. Connected upstream of the heat exchanger 28 is an expansion valve 24, which can be connected into the circuit, as a type of vaporizer, wherein the vaporizer can also be formed by the heat exchanger 28.

The expansion valves 24 operate optionally in a temperature-controlled fashion by virtue of the fact that a temperature sensor 29 which is connected downstream of the vaporizer 22 or the heat exchangers 28, 32, 34 which operate as vaporizers is coupled to said expansion valves 24 (see dotted lines).

A bypass line 30 for the assigned expansion valve 24 can be connected via a further solenoid valve 31. When there is a flow through the bypass line 30 and the expansion valve 24 is decoupled from the circuit, the heat exchanger 28 can also be operated as a condenser in order to heat, and no longer cool, the battery 26 which is directly coupled to said condenser.

The embodiment shown with the bypass line 30 with an assigned solenoid valve 31 is a preferred embodiment. Air-conditioning systems 10 according to the invention without a solenoid valve 31 are also possible.

Parallel to the two branches explained above there are also at least two further branches, one of which is provided with what is referred to as a vehicle component heat exchanger 32, and another of which is provided with what is referred to as a discharge air heat exchanger 34.

The battery 26 is coupled thermally to the coolant circuit in such a way that it forms a heat exchanger within the coolant circuit 14, wherein "heat accumulator" is also to be understood as covering the non-physical term "cold accumulator".

An expansion valve 24 can, and should, also be provided upstream of the heat exchangers 32, 34.

The vehicle component heat exchanger 32 is assigned to an electrical vehicle component to be cooled, for example an inverter and/or an electric drive of the vehicle, and serves to cool the respective vehicle component. The coolant takes up thermal energy from the vehicle component via the vehicle component heat exchanger 32 here.

The discharge air heat exchanger 34 is provided in a discharge air line of the vehicle passenger compartment and serves to take up thermal energy from the discharge air. In this way it is also possible for the thermal energy of the discharge air which is heated by the air-conditioning system and the heat which is output by the vehicle occupants to be taken up by the discharge air heat exchanger 34 and fed back to the circuit 14.

A circulation line of the coolant circuit 14 carries the expanded coolant back to the compressor 16.

Provided downstream of the condenser 18 of the air-conditioning unit 12 is a multiway valve 36 via which the coolant stream is diverted to a cooling device 38 which can be optionally connected into the circuit, for example a front radiator on the vehicle, and an internal heat exchanger 39. The internal heat exchanger 39 couples the line which contains the cooling device 38 to the line leading to the compressor 16.

In figures 1 and 2, the multiway valve 36 is switched in such a way that the coolant flow does not pass through the cooling device 38 which can be connected into the circuit and through the internal heat exchanger 39.

However, in figure 3 the multiway valve 36 is in a valve position in which the cooling device 38 and the internal heat exchanger 39 are connected into the circuit.

The cooling device 38 which can be connected into the circuit is a cooling device for a coolant which is preferably embodied as a condenser which is arranged outside the air-conditioning unit 12, in contrast to the condenser 18 inside the air-conditioning unit.

The text which follows explains the method with which the previously presented air-conditioning system operates and with which it performs open-loop or even closed-loop control of the passenger compartment temperature of the electrically operated vehicle.

Figure 1 shows here the heating process of the battery 26 which occurs when the vehicle is stationary and when the vehicle is coupled to the electrical charging station. In this state, the battery 26 can, as already explained, both be heated and cooled.

According to figure 1, the compressor 16 is activated in the case of heating, with the result that the coolant circuit 14 is, as it were, set in motion via the charging station. The coolant circuit 14 is therefore used not only for heating and cooling the vehicle passenger compartment during the driving mode but also for heating and cooling the battery when the vehicle is coupled to the charging station.

The heating of the battery to provide a heat accumulator is preferably carried out simultaneously with the charging of the battery 26 itself.

However, it is also possible, and even advantageous under certain circumstances, to heat the battery 26 further before or after the electrical charging process or additionally before or after the charging. The battery 26 can also firstly be completely electrically charged before heating or cooling of the battery 26 takes place, for example in order to achieve the most rapid possible charging process of the battery 26. At low external temperatures, the battery will firstly be placed at a temperature which is optimum for the charging process and then charged, and the battery will be finally placed at the maximum temperature.

According to figure 1, the coolant circuit 14 is used as a hot gas circuit.

The valve 36 is switched here in such a way that compressed cooling air does not flow via the cooling device 38. Furthermore, the vaporizer 22 and the heat exchangers 32, 34 are not connected into the circuit. However, if the electrical component which is assigned to the heat exchanger 32, or the vehicle passenger compartment which is assigned to the heat exchanger 34, is still to be warm from the driving mode, it is, of course, possible to switch the valves correspondingly so that this waste heat is used for the coolant circuit 14.

In addition, the compressed coolant downstream of the compressor 16 is not directed via the expansion valve 34 but rather via the bypass line 30 into the heat exchanger 28 of the battery 26, as a result of which the hot coolant heats the battery 26. A solenoid valve 31 in the bypass line 30 has a throttle function in order to perform open- or closed-loop control of the stream of hot gas to the battery 26.

During heating, the energy of the coolant which is already available in the condenser 18 is not carried away via inflowing air because the fan 13 is not operating.

Furthermore, in the figures those lines through which fluid does not flow in a respective state are illustrated by dashed lines.

The battery 26 is heated until the temperature of the battery 26 reaches a predefined maximum value which corresponds to the maximum operating temperature of the battery 26. This maximum value is, depending on the type of battery, for example between 40°C and 60°C.

It is also possible during the charging process of the battery 26 that the vehicle passenger compartment is also heated by the air-conditioning unit 12.

Figure 2 shows the air-conditioning system 10 in a heating mode during operation of the vehicle.

The compressed coolant is condensed in the condenser 18 and outputs heat to the air which is directed through the air-conditioning unit 12. The fan 13 is activated. The liquid coolant is passed onto the heat exchanger 28 of the battery 26, to the vehicle component heat exchanger 32 and/or to the discharge air heat exchanger 34, wherein the coolant is directed in each case via an expansion valve 24 into the heat exchanger 28, 32, 34, which then functions as a vaporizer, and the battery 26, which cools the vehicle component or the discharge air. In the process, the coolant takes up thermal energy from the battery 26, the vehicle component and the discharge air, which thermal energy is fed again to the air-conditioning unit 12 in the circuit of the coolant circuit 14 in order to heat the vehicle passenger compartment. The air-conditioning system 10 is therefore operated as a heat pump.

The battery 26 can be cooled here up to a predefined minimum value which corresponds to the predefined minimum operating temperature of the battery 26. The thermal energy which is stored in the battery 26 and which can be fed to the coolant circuit 14 in order to heat the passenger compartment results from the temperature difference between the predefined maximum value and the predefined minimum value of the temperature of the battery 26.

Figure 3 shows the air-conditioning system 10 during the cooling of the battery 26 in the charging mode and the cooling of the passenger compartment in the driving mode. The compressed coolant is cooled and condensed by means of the cooling device 38 which can be connected into the circuit, and the internal heat exchanger 39 to which a fan is assigned. The liquid coolant is then fed to the various heat exchangers via the open solenoid valves 20. The battery 26 is cooled to the predefined minimum value of the temperature via the heat exchanger 28 which acts as a radiator, with the open expansion valve 24.

When the vehicle is operating, the battery 26 heats up only slowly in itself and requires no or only low additional cooling by the air-conditioning system 10 owing to the low output temperature. It is possible in this context, for example, for the battery 26 to be decoupled entirely from the coolant circuit 14 by means of the associated solenoid valve 20.

The discharge air heat exchanger 34 is decoupled from the coolant circuit 14 by means of its associated solenoid valve 20 since a take-up of energy through cooling of the discharge air is not required or desired. The vehicle component heat exchanger 32 is, on the other hand, coupled to the coolant circuit 14 via the solenoid valve 20 of said heat exchanger 32 in order to cool the corresponding vehicle component.

The air-conditioning unit 12 cools the air flowing through it with the integrated vaporizer 22. There is also a flow of coolant through the condenser 18 of the air-conditioning unit 12, but in the air-conditioning unit 12 said condenser 18 is decoupled from the vehicle passenger compartment since the connection of the condenser 18 to the vehicle passenger compartment is interrupted.

The coolant circuit 14 is operated in such a way that no temperatures below 0°C occur, which prevents the formation of frozen water.

The selection as to whether the battery 26 is cooled during the coupling to the charging station can be made manually at the start of the electrical charging process. In this way, the driver of the vehicle will determine, for example as a function of the time of the next planned use of the vehicle, whether it is expected that the vehicle will have to be cooled or heated. According to the invention, the selection of the cooling mode or heating mode will take place automatically, on the basis of a measurement of the external temperature or the time of year.

Further possible arrangements of the heat exchangers 28, 32, 34 are shown in figures 4a to 4c. In figure 4a, the heat exchanger 28 of the battery 26 and the discharge air heat exchanger 34 are connected parallel to one another in a first section of the coolant circuit 14. In a second section of the coolant circuit 14, the vehicle component heat exchanger 32 is arranged downstream.

In figure 4b, the discharge air heat exchanger 34 and the vehicle component heat exchanger 32 are connected in series, while the heat exchanger 28 of the battery 26 is connected in parallel therewith.

In contrast, in figure 4c the vehicle component heat exchanger 32 is connected in series with the heat exchanger 28 of the battery 26, while the discharge air heat exchanger 34 is connected in parallel therewith.

Through a series connection of various heat exchangers 28, 32, 34 it is possible to simplify the air-conditioning system 10 by reducing the number of valves 20, 24. In addition, when heat exchangers 28, 32, 34 are connected in series, the components which are to be cooled to the greatest degree and to the lowest temperature are arranged at the front of the series circuit. It is, in particular, advantageous in this context to connect the heat exchangers 28, 32, 34 of simultaneously operated components in series.

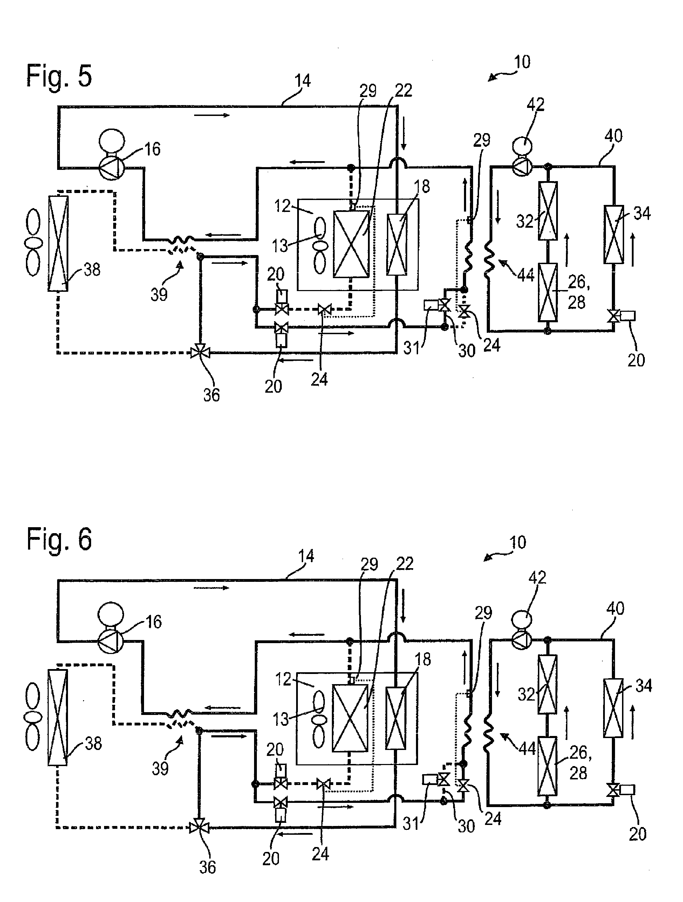

Figures 5 to 8 show a second embodiment of an air-conditioning system 10 in various operating states. The heat exchanger 28 of the battery 26, the vehicle component heat exchanger 32 and the discharge air heat exchanger 34 are, in contrast to the first embodiment, arranged in a separate fluid circuit 40. A coolant circuit 14 with a compressor 16, a condenser 18 and a vaporizer 22 of an air-conditioning unit 12 is formed in accordance with the coolant circuit 14 of the first embodiment which is shown in figures 1 to 3.

The fluid circuit 40 comprises a fluid pump 42 and is coupled to the coolant circuit 14 via a switchable heat exchanger 44. The switchable heat exchanger 44 can be operated as a vaporizer via an expansion valve 24 or as a condenser via a bypass line 30. The bypass line 30 can be connected into the circuit by means of a solenoid valve 31 with a throttle function.

The fluid circuit 40 is operated with a fluid, for example water or glycol or a water/glycol mixture, and the heat exchangers 28, 32, 34 are embodied as liquid coolers or liquid heating devices. The heat exchanger 28 of the battery 26 and the vehicle component heat exchanger 32 are connected in series in a first branch of the fluid circuit 40, and the discharge air heat exchanger 34 is connected parallel therewith in a branch of the fluid circuit 40 which can be decoupled from the solenoid valve 20.

The coolant circuit 14 is operated in a way which is analogous to the first embodiment with a coolant which changes its phase states in the circuit, for example R134a, HF0123yf or R744(CO₂).

The coolant circuit 14 and the fluid circuit 40 can also be embodied in different ways. It is, in particular, possible to couple an air-conditioning unit 12 correspondingly to an existing coolant circuit of a battery of an electrically operated vehicle. It is also possible to provide a plurality of further heat exchangers, for example of further vehicle components to be cooled in the air-conditioning system 10.

It is generally advantageous to allow the coolant to circulate, as it were, through the battery 26 (for example via cooling lamellas and thin lines) in order to achieve a homogenous temperature of all the individual cells of the battery 26.

The selection as to whether the battery 26 is cooled or heated during the coupling to the charging station is made manually or automatically in a way which is analogous to the first embodiment.

The text which follows explains the method with which the air-conditioning system operates according to figures 5 to 8.

In the configuration of the air-conditioning system 10 which is shown in figure 5, the switchable heat exchanger 44 is operated as a condenser and therefore heats the fluid in the fluid circuit 40. The fluid pump 42 pumps the fluid in the counterclockwise direction through the fluid circuit 40, as a result of which, in particular, the battery 26 is heated.

After the charging process and the heating process of the battery 26 have ended, the air-conditioning system 10 is switched, during operation of the vehicle, into the configuration shown in figure 6. The switchable heat exchanger 44 is now operated as a vaporizer via the expansion valve 24. The fluid in the fluid circuit 40 is cooled in the heat exchanger 44, and consequently cools the battery 26, the vehicle component heat exchanger 32 and the discharge air heat exchanger 34. In the process, the fluid takes up heat which is transmitted during the next circulation of the fluid circuit 40 to the coolant circuit 14 through the switchable heat exchanger 44, from which coolant circuit 14 the heat is fed to the condenser 18 of the air-conditioning unit 12.

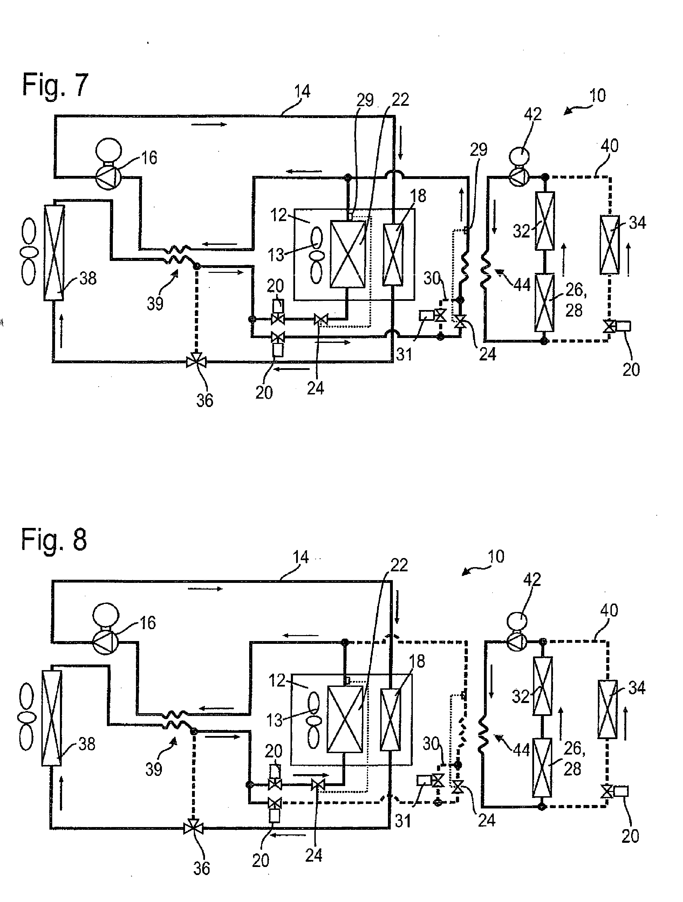

Figure 7 shows the configuration of the air-conditioning unit 10 during a charging process of the battery 26 with cooling of the battery 26. In the coolant circuit 14, the cooling device 38 which can be connected into the circuit and the internal heat exchanger 39 are connected into the circuit via the multiway valve 36, and the switchable heat exchanger 44 is operated as a vaporizer via the expansion valve 24 in order to cool the fluid in the fluid circuit 40. The cooled fluid in the fluid circuit 40 cools the battery 26 and the vehicle component heat exchanger 32 which is connected in series. The discharge air heat exchanger 34 is decoupled from the fluid circuit 40 by means of the assigned solenoid valve 20.

After the charging process of the battery 26 during operation of the vehicle, the air-conditioning system 10 is switched into the configuration shown in figure 8. The switchable heat exchanger 44 is decoupled here from the coolant circuit 14 by the assigned solenoid valve 20, as a result of which the battery 26 is also decoupled from the coolant circuit 14. The coolant circuit 14 requires only the energy to cool the vehicle passenger compartment by means of the vaporizer 22 of the air-conditioning unit 12. The fluid circuit 40 uses the "cold" stored in the battery 26 to cool the vehicle component heat exchanger 32. The fluid circuit 40 can be decoupled from the coolant circuit 14 as long as the temperature of the fluid circuit 40 does not exceed the maximum permitted temperature of the battery 26 or of a vehicle component to be cooled.

Calculations have shown that in the winter mode the heat losses of a stationary vehicle can be completely taken up by the heat stored in the battery, so that the range is reduced only to a minimum degree by the thermal pumping operation through the use of the air-conditioning system. The small power drain of the compressor of the heat pump results from the high temperature level of the heat source of 10-40°C and the resulting small temperature change of the heat pump.

In the summer mode, the invention also restricts the range of the vehicle to a lesser extent than is the case with electric vehicles of previous designs.

The various embodiments of the invention which are shown show specific circuits and arrangements which are, part of the invention as defined in the appended claims.

## Claims

1. Method for controlling the passenger compartment temperature of an electrically operated vehicle which has a battery (26), comprising the steps:
- provision of an air-conditioning system (10) with a coolant circuit (14),
- thermal coupling of the coolant circuit (14) to the battery (26) in such a way that the battery (26) forms a heat accumulator of the coolant circuit (14), and
- optional cooling or heating of the battery (26) while the battery (26) is coupled to an electric charging station for charging the battery (26), the battery (26) being heated directly by means of the coolant circuit (14) and a heat exchanger (28) which is connected into the coolant circuit (14),
**characterized by** the following steps:
- a compressor (16) is activated in the case of heating, the coolant circuit (14) being set in motion via the charging station,
- at low temperatures, the battery (26) is firstly placed at a temperature which is optimum for the charging process and then charged, and the battery (26) is finally placed at the maximum temperature,
a selection of a heating mode of the battery takes place automatically on the basis of a measurement of the external temperature or the time of year.

2. Method according to Claim 1, **characterized in that** the cooling or heating takes place during the charging of the battery (26).

3. Method according to Claim 1 or 2, **characterized in that** the heat accumulator can be coupled to the coolant circuit (14) and can be decoupled thermally therefrom.

4. Method according to one of the preceding claims, **characterized in that** the temperature of the battery (26) during charging is either lowered to a predefined minimum value in a cooling mode or heated to a predefined maximum value in a battery heating mode.

5. Method according to one of the preceding claims, **characterized in that** thermal energy stored in the battery (26) is fed to the coolant circuit (14) during the heating of the vehicle passenger compartment.

6. Method according to one of the preceding claims, **characterized in that** thermal energy in the discharge air of a vehicle passenger compartment and/or of an electrical vehicle component which is to be cooled, in particular of an inverter, and/or of the electric drive of the vehicle, is fed to the coolant circuit (14).

7. Method according to one of the preceding claims, **characterized in that** the battery (26) is cooled directly by means of the coolant circuit (14) and a heat exchanger (28) which is connected into the coolant circuit (14).

8. Method according to one of the preceding claims, **characterized in that** a vaporizer, by means of which the battery (26) is cooled, is present in the coolant circuit (14), in the region of the battery (26).

9. Method according to Claim 8, **characterized in that** during the cooling of the battery (26) the coolant is expanded by means of an expansion valve (24) which can be connected into the circuit in the region of the battery (26) so that said coolant can take up heat from the battery (26) afterwards.

10. Method according to one of the preceding claims, **characterized in that** a condenser by means of which the battery (26) is heated, is present in the coolant circuit (14), in the region of the battery (26).

11. Method according to one of the preceding claims, **characterized in that**, during the coupling to the charge station, the coolant circuit (14) is used as a hot gas circuit in order to heat the battery (26) by means of the hot gas circuit.

12. Method according to one of the preceding claims, **characterized in that** the selection of cooling of the battery (26) during the coupling to the charge station is made manually, in particular at the start of the electrical charging process.

13. Method according to one of Claims 1 to 11, **characterized in that** the selection of the cooling mode is made automatically on the basis of the external temperature and/or the time of year.

14. Method according to one of the preceding claims, **characterized in that** a fluid circuit (40) which is coupled to the coolant circuit (14) is provided, in which fluid circuit (40) the battery (26) and at least one heat source, in particular a discharge air heat exchanger (34) or a vehicle component heat exchanger (32) of a vehicle component which is to be cooled are arranged, wherein during the heating of the battery (26) heat is fed to the fluid circuit (40) from the coolant circuit (14), and during the operation of the vehicle thermal energy is output to the coolant circuit (14) and/or during cooling of the battery (26) thermal energy is extracted and during operation of the vehicle thermal energy of the heat source is taken up by the battery (26).

15. Air-conditioning system (10) for an electrically operated vehicle, having a coolant circuit (14) which has a compressor (16), a vaporizer (22), and a condenser (18),
wherein the coolant circuit (14) includes, downstream of the condenser (18), at least a first and a second parallel individual branches:
- the first branch comprising the vaporiser (22) and
- the second branch comprising a vehicule battery (26) and a heat exchanger (28),
the vehicle battery (26) being thermally coupled directly via the heat exchanger (28) assigned thereto to the coolant circuit (14) in such a way that the coolant circuit (14) optionally cools or heats the battery (26), or heat from the battery (26) can be fed into the coolant circuit (14)
**characterized in that** the system executes the following steps: while the battery (26) is coupled to an electric charging station for charging the battery (26), the battery (26) being heated directly by means of the coolant circuit (14) and a heat exchanger (28) which is connected into the coolant circuit (14), the compressor (16) is activated in the case of heating, the coolant circuit (14) being set in motion via the charging station, the battery (26) is firstly placed at a temperature which is optimum for the charging process and then charged, and the battery (26) is finally placed at the maximum temperature, a selection of a heating mode of the battery takes place automatically on the basis of a measurement of the external temperature or the time of year, at low temperatures.

16. Air-conditioning system (10) according to Claim 15, **characterized in that** a switchable heat exchanger (28, 44) is provided in the coolant circuit (14), which heat exchanger (28, 44) can be operated as a vaporizer by an expansion valve (24) or as a condenser via a bypass line (30), in order to cool or heat the directly or indirectly coupled battery (26).

17. Air-conditioning system (10) according to Claim 15 or 16, **characterized in that** a discharge air heat exchanger (34) is provided which is connected to a discharge air line of a vehicle passenger compartment in order to take up thermal energy from the discharge air.

18. Air-conditioning system (10) according to one of Claims 15 to 17, **characterized in that** a vehicle component heat exchanger (32) is provided which is connected to an electrical vehicle component, in particular an inverter or an electric drive of the vehicle, in order to take up thermal energy from the vehicle component or the drive.

19. Air-conditioning system (10) according to one of Claims 15 to 18, **characterized in that** at least two heat exchangers (28, 32, 34), in particular all the heat exchangers (28, 32, 34) which feed thermal energy to the coolant circuit (14) are connected in parallel.

20. Air-conditioning system (10) according to one of Claims 15 to 18, **characterized in that** at least two heat exchangers (28, 32, 34) which feed thermal energy to the coolant circuit are connected in series, wherein the heat exchangers (28, 32, 34) of the components which are to be cooled to the greatest extent and have the lowest operating temperature are arranged at the front of the series circuit.

21. Air-conditioning system (10) according to one of Claims 15 to 20, **characterized in that** a fluid circuit (40) which is coupled to the coolant circuit (14) is provided, which fluid circuit (40) has a fluid pump (42), the battery heat exchanger (28) and at least one further heat exchanger (32, 34), in particular a discharge air heat exchanger (34) or a vehicle component heat exchanger (32) of a vehicle component which is to be cooled.

22. Air-conditioning system (10) according to Claim 21, **characterized in that** the fluid circuit (40) is coupled to the coolant circuit (14) via a switchable heat exchanger (44).

23. Air-conditioning system (10) according to Claim 21 or 22, **characterized in that** various coolants are provided in the circuits (14, 40), wherein a coolant which changes its phase states in the circuit, in particular R134a, HF01234yf or R744, is used in the coolant circuit (14), and preferably a fluid, in particular water or glycol or a water/glycol mixture, is used in the fluid circuit (40).

24. Air-conditioning system (10) according to one of Claims 15 to 23, **characterized in that** a cooling device (38) which can be optionally connected into the coolant circuit (14) is provided.

25. Air-conditioning system (10) according to one of Claims 15 to 24, **characterized in that** an air-conditioning unit (12) which is connected into the coolant circuit (14) and in which the condenser (18) and a separate vaporizer (22) are seated, is provided.

26. Air-conditioning system (10) according to Claim 25, **characterized in that** the condenser (18) is fixedly arranged in the coolant circuit (14), and the air-conditioning unit (12) can optionally form or disconnect a connection of the condenser (18) to the vehicle passenger compartment.

27. Air-conditioning system (10) according to one of Claims 15 to 26, **characterized in that** an internal heat exchanger (39) is provided in the coolant circuit (14).

## Patentansprüche

1. Verfahren zum Steuern der Temperatur im Fahrgastraum eines elektrisch betriebenen Fahrzeugs, das eine Batterie (26) aufweist, folgende Schritte umfassend:
- Bereitstellen einer Klimaanlage (10) mit einem Kühlmittelkreislauf (14),
- Wärmekoppeln des Kühlmittelkreislaufs (14) mit der Batterie (26) derart, dass die Batterie (26) einen Wärmeakkumulator des Kühlmittelkreislaufs (14) bildet, und
- optionales Kühlen oder Erwärmen der Batterie (26), während die Batterie (26) an eine elektrische Ladestation zum Laden der Batterie (26) gekoppelt ist, wobei die Batterie (26) direkt mittels des Kühlmittelkreislaufs (14) und eines Wärmetauschers (28) erwärmt wird, der in den Kühlmittelkreislauf (14) eingeschlossen ist,
**gekennzeichnet durch** die folgenden Schritte:
- ein Kompressor (16) wird im Fall des Erwärmens aktiviert, wobei der Kühlmittelkreislauf (14) über die Ladestation in Gang gesetzt wird,
- bei niedrigen Temperaturen wird die Batterie (26) zuerst bei einer Temperatur platziert, die für den Ladeprozess optimal ist, und dann geladen und die Batterie (26) wird schließlich bei der Maximaltemperatur platziert,
wobei eine Auswahl eines Heizmodus der Batterie automatisch auf der Grundlage einer Messung der Außentemperatur oder der Jahreszeit stattfindet.

2. Verfahren nach Anspruch 1, **dadurch gekennzeichnet, dass** das Kühlen oder Erwärmen während des Ladens der Batterie (26) stattfindet.

3. Verfahren nach Anspruch 1 oder 2, **dadurch gekennzeichnet, dass** der Wärmeakkumulator an den Kühlmittelkreislauf (14) gekoppelt und thermisch von diesem abgekoppelt werden kann.

4. Verfahren nach einem der vorhergehenden Ansprüche, **dadurch gekennzeichnet, dass** die Temperatur der Batterie (26) während des Ladens entweder in einem Kühlmodus auf einen vorbestimmten Minimalwert gesenkt oder in einem Batterieerwärmungsmodus auf einen vorbestimmten Maximalwert erhöht wird.

5. Verfahren nach einem der vorhergehenden Ansprüche, **dadurch gekennzeichnet, dass** in der Batterie (26) gespeicherte Wärmeenergie während des Erwärmens des Fahrgastraumes eines Fahrzeugs dem Kühlmittelkreislauf (14) zugeführt wird.

6. Verfahren nach einem der vorhergehenden Ansprüche, **dadurch gekennzeichnet, dass** Wärmeenergie in der Abluft eines Fahrgastraumes eines Fahrzeugs und/oder einer zu kühlenden elektrischen Fahrzeugkomponente, insbesondere eines Wechselrichters, und/oder des elektrischen Antriebs des Fahrzeugs dem Kühlmittelkreislauf (14) zugeführt wird.

7. Verfahren nach einem der vorhergehenden Ansprüche, **dadurch gekennzeichnet, dass** die Batterie (26) mittels des Kühlmittelkreislaufs (14) und eines Wärmetauschers (28), der in den Kühlmittelreislauf (14) eingeschlossen ist, direkt gekühlt wird.

8. Verfahren nach einem der vorhergehenden Ansprüche, **dadurch gekennzeichnet, dass** im Kühlmittelkreislauf (14) im Bereich der Batterie (26) ein Verdampfer vorhanden ist, durch den die Batterie (26) gekühlt wird.

9. Verfahren nach Anspruch 8, **dadurch gekennzeichnet, dass** das Kühlmittel während des Kühlens der Batterie (26) mittels eines Entspannungsventils (24) entspannt wird, das im Bereich der Batterie (26) in den Kühlmittelreislauf (14) eingeschlossen sein kann, so dass das Kühlmittel danach Wärme von der Batterie (26) aufnehmen kann.

10. Verfahren nach einem der vorhergehenden Ansprüche, **dadurch gekennzeichnet, dass** im Kühlmittelkreislauf (14) im Bereich der Batterie (26) ein Kondensator vorhanden ist, durch den die Batterie (26) erwärmt wird.

11. Verfahren nach einem der vorhergehenden Ansprüche, **dadurch gekennzeichnet, dass** der Kühlmittelkreislauf (14) während der Kopplung an die Ladestation als Heißgaskreislauf verwendet wird, um die Batterie (26) mittels des Heißgaskreislaufs zu erwärmen.

12. Verfahren nach einem der vorhergehenden Ansprüche, **dadurch gekennzeichnet, dass** die Auswahl des Kühlens der Batterie (26) während der Kopplung an die Ladestation manuell vorgenommen wird, insbesondere zu Beginn des elektrischen Ladevorgangs.

13. Verfahren nach einem der Ansprüche 1 bis 11, **dadurch gekennzeichnet, dass** die Auswahl des Kühlmodus auf der Grundlage der Außentemperatur und/oder der Jahreszeit automatisch vorgenommen wird.

14. Verfahren nach einem der vorhergehenden Ansprüche, **dadurch gekennzeichnet, dass** ein Fluidkreislauf (40) bereitgestellt ist, der an den Kühlmittelkreislauf (14) gekoppelt ist, wobei in dem Fluidkreislauf (40) die Batterie (26) und mindestens eine Wärmequelle, insbesondere ein Abluft-Wärmetauscher (34) oder ein Fahrzeugkomponenten-Wärmetauscher (32) einer zu kühlenden Fahrzeugkomponente, angeordnet sind, wobei während des Erwärmens der Batterie (26) dem Fluidkreislauf (40) vom Kühlmittelkreislauf (14) Wärme zugeführt wird und während des Betriebes des Fahrzeugs Wärmeenergie an den Kühlmittelkreislauf (14) abgegeben wird und/oder während des Kühlens der Batterie (26) Wärmeenergie abgezogen wird und während des Betriebes des Fahrzeugs Wärmeenergie der Wärmequelle von der Batterie (26) aufgenommen wird.

15. Klimaanlage (10) für ein elektrisch betriebenes Fahrzeug mit einem Kühlmittelkreislauf (14), der einen Kompressor (16), einen Verdampfer (22) und einen Kondensator (18) aufweist,
wobei der Kühlmittelkreislauf (14) stromabwärts des Kondensators (18) mindestens einen ersten und einen zweiten parallelen Einzelabzweig beinhaltet, wobei:
- der erste Abzweig den Verdampfer (22) umfasst und
- der zweite Abzweig eine Fahrzeugbatterie (26) und einen Wärmetauscher (28) umfasst,
wobei die Fahrzeugbatterie (26) über den ihr zugeordneten Wärmetauscher (28) derart thermisch direkt mit dem Kühlmittelkreislauf (14) gekoppelt ist, dass der Kühlmittelkreislauf (14) die Batterie (26) optional kühlt oder erwärmt oder Wärme aus der Batterie (26) in den Kühlmittelkreislauf (14) geführt werden kann,
**dadurch gekennzeichnet, dass** das System die folgenden Schritte ausführt:
während die Batterie (26) an die elektrische Ladestation gekoppelt ist, um die Batterie (26) zu laden, wird die Batterie (26) mittels des Kühlmittelkreislaufs (14) und eines Wärmetauschers (28), der in den Kühlmittelreislauf (14) eingeschlossen ist, direkt erwärmt, der Kompressor (16) wird im Fall des Erwärmens aktiviert, der Kühlmittelkreislauf (14) wird über die Ladestation in Gang gesetzt, die Batterie (26) wird zuerst bei einer Temperatur platziert, die für den Ladeprozess optimal ist, und dann geladen und die Batterie (26) wird schließlich bei der Maximaltemperatur platziert, wobei bei niedrigen Temperaturen eine Auswahl eines Heizmodus der Batterie automatisch auf der Grundlage einer Messung der Außentemperatur oder der Jahreszeit stattfindet.

16. Klimaanlage (10) nach Anspruch 15, **dadurch gekennzeichnet, dass** im Kühlmittelkreislauf (14) ein schaltbarer Wärmetauscher (28, 44) bereitgestellt ist, wobei der Wärmetauscher (28, 44) durch ein Entspannungsventil (24) als Verdampfer oder über eine Nebenleitung (30) als Kondensator betrieben werden kann, um die direkt oder indirekt angekoppelte Batterie (26) zu kühlen oder zu erwärmen.

17. Klimaanlage (10) nach Anspruch 15 oder 16, **dadurch gekennzeichnet, dass** ein Abluft-Wärmetauscher (34) bereitgestellt ist, der an eine Abluftleitung eines Fahrgastraumes eines Fahrzeugs angeschlossen ist, um Wärmeenergie aus der Abluft aufzunehmen.

18. Klimaanlage (10) nach einem der Ansprüche 15 bis 17, **dadurch gekennzeichnet, dass** ein Fahrzeugkomponenten-Wärmetauscher (32) bereitgestellt ist, der an eine elektrische Fahrzeugkomponente angeschlossen ist, insbesondere einen Wechselrichter oder einen elektrischen Antrieb des Fahrzeugs, um Wärmeenergie aus der Fahrzeugkomponente oder dem Antrieb aufzunehmen.

19. Klimaanlage (10) nach einem der Ansprüche 15 bis 18, **dadurch gekennzeichnet, dass** mindestens zwei Wärmetauscher (28, 32, 34), insbesondere alle Wärmetauscher (28, 32, 34), die dem Kühlmittelkreislauf (14) Wärmeenergie zuführen, parallel angeschlossen sind.

20. Klimaanlage (10) nach einem der Ansprüche 15 bis 18, **dadurch gekennzeichnet, dass** mindestens zwei Wärmetauscher (28, 32, 34), die dem Kühlmittelkreislauf Wärmeenergie zuführen, in Reihe angeschlossen sind, wobei die Wärmetauscher (28, 32, 34) der Komponenten, die am stärksten zu kühlen sind und die niedrigste Betriebstemperatur aufweisen, an der Vorderseite der Reihenschaltung angeordnet sind.

21. Klimaanlage (10) nach einem der Ansprüche 15 bis 20, **dadurch gekennzeichnet, dass** ein Fluidkreislauf (40) bereitgestellt ist, der an den Kühlmittelkreislauf (14) gekoppelt ist, wobei der Fluidkreislauf (40) eine Fluidpumpe (42), den Batterie-Wärmetauscher (28) und mindestens einen weiteren Wärmetauscher (32, 34), insbesondere einen Abluft-Wärmetauscher (34) oder einen Fahrzeugkomponenten-Wärmetauscher (32) einer zu kühlenden Fahrzeugkomponente, aufweist.

22. Klimaanlage (10) nach Anspruch 21, **dadurch gekennzeichnet, dass** der Fluidkreislauf (40) über einen schaltbaren Wärmetauscher (44) an den Kühlmittelkreislauf (14) gekoppelt ist.

23. Klimaanlage (10) nach Anspruch 21 oder 22, **dadurch gekennzeichnet, dass** in den Kreisläufen (14, 40) unterschiedliche Kühlmittel bereitgestellt sind, wobei im Kühlmittelkreislauf (14) ein Kühlmittel verwendet wird, das seinen Phasenzustand im Kreislauf ändert, insbesondere R134a, HF01234yf oder R744, und im Fluidkreislauf (40) vorzugsweise ein Fluid, insbesondere Wasser oder Glykol oder eine Wasser-Glykol-Mischung verwendet wird.

24. Klimaanlage (10) nach einem der Ansprüche 15 bis 23, **dadurch gekennzeichnet, dass** eine Kühlvorrichtung (38) bereitgestellt ist, die optional in den Kühlmittelkreislauf (14) eingeschlossen werden kann.

25. Klimaanlage (10) nach einem der Ansprüche 15 bis 24, **dadurch gekennzeichnet, dass** eine Klimaeinheit (12) bereitgestellt ist, die in den Kühlmittelkreislauf (14) eingeschlossen ist und in der der Kondensator (18) und ein separater Verdampfer (22) eingesetzt sind.

26. Klimaanlage (10) nach Anspruch 25, **dadurch gekennzeichnet, dass** der Kondensator (18) feststehend im Kühlmittelkreislauf (14) angeordnet ist und die Klimaeinheit (12) optional
einen Anschluss des Kondensators (18) an den Fahrgastraum eines Fahrzeugs bilden oder trennen kann.

27. Klimaanlage (10) nach einem der Ansprüche 15 bis 26, **dadurch gekennzeichnet, dass** im Kühlmittelkreislauf (14) ein interner Wärmetauscher (39) bereitgestellt ist.

## Revendications

1. Procédé de contrôle de la température du compartiment passager d'un véhicule à commande électrique présentant une batterie (26), comprenant les étapes suivantes :
- fourniture d'un système de climatisation (10) avec un circuit de réfrigérant (14),
- couplage thermique du circuit de réfrigérant (14) à la batterie (26) de telle sorte que la batterie (26) forme un accumulateur de chaleur du circuit de réfrigérant (14), et
- refroidissement ou chauffage optionnel de la batterie (26) tandis que la batterie (26) est accouplée à un poste de charge électrique pour charger la batterie (26), la batterie (26) étant chauffée directement au moyen du circuit de réfrigérant (14) et d'un échangeur de chaleur (28) qui est connecté dans le circuit de réfrigérant (14), **caractérisé par** les étapes suivantes :
- un compresseur (16) est activé dans le cas du chauffage, le circuit de réfrigérant (14) étant mis en mouvement par le biais du poste de charge,
- à basses températures, la batterie (26) est tout d'abord amenée à une température optimale pour le processus de charge puis est chargée, et la batterie (26) est finalement amenée à la température maximale,
une sélection d'un mode de chauffage de la batterie étant effectuée automatiquement sur la base d'une mesure de la température extérieure ou de la période de l'année.

2. Procédé selon la revendication 1, **caractérisé en ce que** le refroidissement ou le chauffage a lieu au cours de la charge de la batterie (26).

3. Procédé selon la revendication 1 ou 2, **caractérisé en ce que** l'accumulateur de chaleur peut être accouplé au circuit de réfrigérant (14) et peut être désaccouplé thermiquement de celui-ci.

4. Procédé selon l'une quelconque des revendications précédentes, **caractérisé en ce que** la température de la batterie (26) au cours de la charge soit est abaissée à une valeur minimale prédéfinie dans un mode de refroidissement soit est chauffée à une valeur maximale prédéfinie dans un mode de chauffage de batterie.

5. Procédé selon l'une quelconque des revendications précédentes, **caractérisé en ce que** l'énergie thermique stockée dans la batterie (26) est acheminée au circuit de réfrigérant (14) au cours du chauffage du compartiment passager du véhicule.

6. Procédé selon l'une quelconque des revendications précédentes, **caractérisé en ce que** l'énergie thermique dans l'air de décharge d'un compartiment passager d'un véhicule et/ou d'un composant de véhicule électrique qui doit être refroidi, en particulier d'un inverseur, et/ou de l'entraînement électrique du véhicule, est acheminée au circuit de réfrigérant (14).

7. Procédé selon l'une quelconque des revendications précédentes, **caractérisé en ce que** la batterie (26) est refroidie directement au moyen du circuit de réfrigérant (14) et d'un échangeur de chaleur (28) qui est connecté dans le circuit de réfrigérant (14).

8. Procédé selon l'une quelconque des revendications précédentes, **caractérisé en ce qu'**un vaporisateur, au moyen duquel la batterie (26) est refroidie, est présent dans le circuit de réfrigérant (14), dans la région de la batterie (26).

9. Procédé selon la revendication 8, **caractérisé en ce qu'**au cours du refroidissement de la batterie (26), le réfrigérant est détendu au moyen d'un détendeur (24) qui peut être connecté dans le circuit dans la région de la batterie (26) de telle sorte que le réfrigérant puisse ultérieurement absorber la chaleur provenant de la batterie (26).

10. Procédé selon l'une quelconque des revendications précédentes, **caractérisé en ce qu'**un condenseur au moyen duquel la batterie (26) est chauffée, est présent dans le circuit de réfrigérant (14), dans la région de la batterie (26).

11. Procédé selon l'une quelconque des revendications précédentes, **caractérisé en ce qu'**au cours de l'accouplement au poste de charge, le circuit de réfrigérant (14) est utilisé en tant que circuit de gaz chaud afin de chauffer la batterie (26) au moyen du circuit de gaz chaud.

12. Procédé selon l'une quelconque des revendications précédentes, **caractérisé en ce que** la sélection du refroidissement de la batterie (26) au cours de l'accouplement au poste de charge est effectuée manuellement, en particulier au début du processus de charge électrique.

13. Procédé selon l'une quelconque des revendications 1 à 11, **caractérisé en ce que** la sélection du mode de refroidissement est effectuée automatiquement sur la base de la température extérieure et/ou de la période de l'année.

14. Procédé selon l'une quelconque des revendications précédentes, **caractérisé en ce qu'**il est prévu un circuit fluidique (40) accouplé au circuit de réfrigérant (14), dans lequel circuit fluidique (40) sont disposées la batterie (26) et au moins une source de chaleur, en particulier un échangeur de chaleur (34) à air de décharge ou un échangeur de chaleur de composant de véhicule (32) d'un composant de véhicule qui doit être refroidi, de la chaleur, au cours du chauffage de la batterie (26), étant acheminée au circuit fluidique (40) depuis le circuit de réfrigérant (14), et au cours du fonctionnement du véhicule, de l'énergie thermique étant acheminée au circuit de réfrigérant (14) et/ou au cours du refroidissement de la batterie (26), de l'énergie thermique étant extraite et au cours du fonctionnement du véhicule, de l'énergie thermique de la source de chaleur étant absorbée par la batterie (26).

15. Système de climatisation (10) pour un véhicule à commande électrique, ayant un circuit de réfrigérant (14) qui présente un compresseur (16), un vaporisateur (22) et un condenseur (18),
le circuit de réfrigérant (14) comportant, en aval du condenseur (18), au moins une première et une deuxième branche individuelles parallèles :
- la première branche comprenant le vaporisateur 22) et
- la deuxième branche comprenant une batterie de véhicule (26) et un échangeur de chaleur (28), la batterie de véhicule (26) étant accouplée thermiquement directement au circuit de réfrigérant (14) par le biais de l'échangeur de chaleur (28) qui lui est affecté de telle sorte que le circuit de réfrigérant (14) refroidisse ou chauffe, optionnellement, la batterie (26), ou que de la chaleur provenant de la batterie (26) puisse être acheminée dans le circuit de réfrigérant (14), **caractérisé en ce que** le système exécute les étapes suivantes :
tandis que la batterie (26) est accouplée à un poste de charge électrique pour charger la batterie (26), la batterie (26) étant chauffée directement au moyen du circuit de réfrigérant (14) et d'un échangeur de chaleur (28) qui est connecté dans le circuit de réfrigérant (14), le compresseur (16) est activé dans le cas d'un chauffage, le circuit de réfrigérant (14) étant mis en mouvement par le biais du poste de charge, la batterie (26) est tout d'abord amenée à une température qui est optimale pour le processus de charge puis est chargée, et la batterie (26) est finalement amenée à la température maximale, une sélection d'un mode de chauffage de la batterie se produisant automatiquement sur la base d'une mesure de la température extérieure ou de la période de l'année, à basses températures.

16. Système de climatisation (10) selon la revendication 15, **caractérisé en ce qu'**un échangeur de chaleur commutable (28, 44) est prévu dans le circuit de réfrigérant (14), lequel échangeur de chaleur (28, 44) peut être utilisé en tant que vaporisateur par un détendeur (24) ou en tant que condenseur par une ligne de dérivation (30), afin de refroidir ou de chauffer la batterie (26) accouplée directement ou indirectement.

17. Système de climatisation (10) selon la revendication 15 ou 16, **caractérisé en ce qu'**un échangeur de chaleur (34) à air de décharge est prévu, lequel est connecté à une ligne d'air de décharge d'un compartiment passager d'un véhicule afin d'absorber l'énergie thermique provenant de l'air de décharge.

18. Système de climatisation (10) selon l'une quelconque des revendications 15 à 17, **caractérisé en ce qu'**un échangeur de chaleur (32) de composant de véhicule est prévu, lequel est connecté à un composant de véhicule électrique, en particulier à un inverseur ou à un entraînement électrique du véhicule, afin d'absorber l'énergie thermique provenant du composant de véhicule ou de l'entraînement.

19. Système de climatisation (10) selon l'une quelconque des revendications 15 à 18, **caractérisé en ce qu'**au moins deux échangeurs de chaleur (28, 32, 34), en particulier la totalité des échangeurs de chaleur (28, 32, 34) qui acheminent de l'énergie thermique au circuit de réfrigérant (14), sont connectés en parallèle.

20. Système de climatisation (10) selon l'une quelconque des revendications 15 à 18, **caractérisé en ce qu'**au moins deux échangeurs de chaleur (28, 32, 34) qui acheminent de l'énergie thermique au circuit de réfrigérant sont connectés en série, les échangeurs de chaleur (28, 32, 34) des composants qui doivent être le plus refroidis et qui ont la température de fonctionnement la plus basse étant disposés à l'avant du circuit en série.

21. Système de climatisation (10) selon l'une quelconque des revendications 15 à 20, **caractérisé en ce qu'**un circuit fluidique (40) qui est accouplé au circuit de réfrigérant (14) est prévu, lequel circuit fluidique (40) présente une pompe fluidique (42), l'échangeur de chaleur (28) de la batterie et au moins un autre échangeur de chaleur (32, 34), en particulier un échangeur de chaleur (34) à air de décharge ou un échangeur de chaleur de composant de véhicule (32) d'un composant de véhicule devant être refroidi.

22. Système de climatisation (10) selon la revendication 21, **caractérisé en ce que** le circuit fluidique (40) est accouplé au circuit de réfrigérant (14) par le biais d'un échangeur de chaleur commutable (44).

23. Système de climatisation (10) selon la revendication 21 ou 22, **caractérisé en ce que** divers réfrigérants sont prévus dans les circuits (14, 40), un réfrigérant dont les états de phase varient dans le circuit, en particulier R134a, HF01234yf ou R744, étant utilisé dans le circuit de réfrigérant (14), et de préférence un fluide, en particulier de l'eau ou du glycol ou un mélange d'eau/glycol, étant utilisé dans le circuit fluidique (40).

24. Système de climatisation (10) selon l'une quelconque des revendications 15 à 23, **caractérisé en ce qu'**un dispositif de refroidissement (38) qui peut être en option connecté dans le circuit de réfrigérant (14) est prévu.

25. Système de climatisation (10) selon l'une quelconque des revendications 15 à 24, **caractérisé en ce qu'**une unité de climatisation (12) qui est connectée dans le circuit de réfrigérant (14) et dans laquelle le condenseur (18) et un vaporisateur séparé (22) sont reçus, est prévue.

26. Système de climatisation (10) selon la revendication 25, **caractérisé en ce que** le condenseur (18) est disposé fixement dans le circuit de réfrigérant (14), et l'unité de climatisation (12) peut éventuellement former ou déconnecter une connexion du condenseur (18) au compartiment passager du véhicule.

27. Système de climatisation (10) selon l'une quelconque des revendications 15 à 26, **caractérisé en ce qu'**un échangeur de chaleur interne (30) est prévu dans le circuit de réfrigérant (14).
